# FASCICULE DE BREVET EUROPEEN

(11) **EP 0 658 024 B1**
(45) Date de publication et mention de la délivrance du brevet: **22.04.1998**
(21) Numéro de dépôt: 94402768.9
(22) Date de dépôt: 02.12.1994
(51) Int. Cl.: H04L 12/28, H04B 5/00

(54) **Réseau local à transmission radio**
Ein drahtloses lokales Netzwerk
A wireless local network

(30) Priorité: 06.12.1993 FR 9314587
(43) Date de publication de la demande: 14.06.1995
(73) Titulaire: ALCATEL ALSTHOM COMPAGNIE GENERALE D'ELECTRICITE, 75008 Paris (FR)
(72) Inventeur: Thomas, Gérard, F-95610 Eragny Sur Oise (FR); Brignol, Luc, F-75015 Paris (FR); Christien, Florence, F-75017 Paris (FR)
(74) Mandataire: Pothet, Jean Rémy Emile Ludovic

(56) Documents cités:
- EP-A- 0 257 947
- WO-A-88/07794
- WO-A-91/15068
- WO-A-92/10883
- DE-A- 3 140 960
- US-A- 5 025 452
- IEEE NETWORK: THE MAGAZINE OF COMPUTER COMMUNICATIONS, vol.5, no.6, Novembre 1991, NEW YORK US pages 31 - 38, XP000248463 D. BUCHHOLZ ET AL. 'Wireless In-Building Network Architecture and Protocols'
- IEEE NETWORK: THE MAGAZINE OF COMPUTER COMMUNICATIONS, vol.5, no.6, Novembre 1991, NEW YORK US pages 21 - 26, XP000248464 J.MITZLAFF 'Radio Propagation and Anti-Multipath Techniques in the WIN Environment'

## Description

L'invention concerne un réseau local à transmission radio, un tel réseau comportant plusieurs stations constituées chacune d'une machine informatique couplée à une interface d'émission-réception radio.

Dans les réseaux connus à transmission radio, chaque station communique directement avec toutes les autres, en émettant des messages comportant chacun une adresse désignant au moins une station destinataire. La qualité du signal reçu par une station dépend beaucoup de la distance vis-à-vis de la station ayant émis le message, et des obstacles rencontrés par l'onde porteuse radio entre la station d'origine et la station destinataire. La configuration des locaux et des meubles, ainsi que la composition des matériaux qui les constituent, déterminent la qualité de la transmission entre les stations, et il n'est pas possible de les modifier. Il est seulement possible de prévoir des dispositifs de contrôle automatique de gain dans les interfaces d'émission-réception radio, pour compenser dynamiquement les variations de l'amplitude du signal reçu.

Les réseaux du type connu présentent l'inconvénient d'avoir un débit limité aux environs de 2 Mb/s seulement. Le débit est limité par le protocole d'échange des messages entre stations. Ce protocole est lent à cause de deux problèmes dûs à la transmission radio.

Un premier problème est que, lorsqu'une station reçoit un message, l'amplitude du signal radio qu'elle reçoit est fonction de la distance vis-à-vis de la station émettant le message; et est fonction des atténuations et des réflexions causées par les obstacles voisins des deux stations considérées. L'interface d'émission-réception radio de chaque station a donc besoin d'un certain délai pour régler son gain et pour se synchroniser sur les bits d'un message. Le document US 5.025.452 décrit un réseau local à transmission radio, comportant plusieurs stations comportant chacune des moyens pour émettre et recevoir des messages radio ; et comportant un répéteur pour réémettre chaque message émis par une station, ce répéteur étant couplé à un câble rayonnant passant à proximité de toutes les stations. Ce réseau connu présente beaucoup moins de problèmes de transmission que les réseaux connus parce que le câble rayonnant passe à proximité de toutes les stations, sans exception. L'amplitude du signal radio reçu par une station n'est pas fonction de la distance séparant cette station de la station ayant émis ce signal, mais est fonction des distances séparant le câble rayonnant de chacune de ces stations respectivement, et de l'atténuation le long du câble rayonnant. Cette atténuation est constante dans le temps. Les interfaces d'émission-réception radio reçoivent donc des signaux radio ayant une dynamique beaucoup faible que celle des signaux reçus dans un réseau de type connu. Le délai nécessaire pour régler les dispositifs de contrôle automatique de gain et de synchronisation peut donc être beaucoup réduit car les interfaces radio des stations peuvent être équipées de dispositifs de contrôle automatique de gain ayant une dynamique plus faible, donc réagissant dans un délai plus court. Donc le débit peut finalement être plus élevé.

Le but de l'invention est de proposer un autre type de réseau local à transmission radio, permettant de transmettre un débit d'informations important.

L'objet de l'invention est un réseau local à transmission radio, comportant plusieurs stations comportant chacune des moyens pour émettre et recevoir des messages radio; et comportant un répéteur pour réémettre chaque message émis par une station, ce répéteur étant couplé à un câble rayonnant passant à proximité de toutes les stations; et chaque station comportant des moyens pour ne traiter que les messages qui lui sont adressés et qui ont été réémis par le répéteur; caractérisé en ce le répéteur reçoit et réémet les messages des stations dans une même bande de fréquence, en alternat, mais adjoint à chaque message réémis au moins une information indiquant que le message a transité par le répéteur ; et en ce chaque station comporte des moyens pour ne prendre en compte que les messages contenant une information indiquant que le message a transité par le répéteur.

Un second problème lié à la transmission radio est que les réseaux connus ne permettent pas la mise en oeuvre d'un protocole du type à accès multiple par détection de porteuse et détection de collision, qui est consiste, lorsqu'une station veut émettre un message, à écouter s'il n'y a pas de station déjà en train d'émettre un message sur le même canal, puis à émettre si aucune porteuse n'est détectée; et consiste à vérifier que le message émis n'est pas brouillé par une interférence d'une autre station ayant commencé à émettre au même instant. Dans ce dernier cas, chacune des deux stations recommence à émettre son message après un délai d'attente pseudo-aléatoire, et après avoir vérifié l'absence de porteuse. Ce type de protocole est très simple à mettre en oeuvre, et présente l'avantage d'être rapide et donc de faciliter l'obtention d'un débit moyen élevé.

Au contraire, les réseaux connus à transmission radio ne peuvent pas détecter une collision, car chaque station est incapable de détecter une interférence sur un signal qu'elle est en train d'émettre. Les stations mettent en oeuvre un protocole consistant à émettre, de la station destinataire vers la station d'origine un message d'accusé de réception après qu'un message ait été correctement reçu par la station destinataire. Lorsqu'une station a fini d'émettre un message, elle doit donc s'abstenir d'émettre un autre message pendant un certain délai, qui correspond à la somme du délai maximal de propagation du message, et du délai maximal de propagation de l'accusé de réception, pour être capable de recevoir l'accusé de réception.

Selon un mode de réalisation préférentiel du réseau selon l'invention, chaque station comporte des moyens pour émettre chaque message avec une durée prédéterminée; le répéteur comporte des moyens pour réémettre chaque message après un délai prédéterminé, au moins égal à la durée fixée pour le message; et chaque station comporte des moyens pour, lorsqu'elle a émis un message, comparer le message qu'elle reçoit ensuite, en provenance du répéteur, avec le message qu'elle a émis, et réiter l'émission de ce message avec un délai pseudo-aléatoire, si la comparaison ne conclut pas qu'ils sont identiques.

Le réseau ainsi caractérisé permet à chaque station, qui a émis un message, de contrôler qu'il n'y a pas de collision avec d'autres messages et qu'il n'y a pas d'erreur de transmission. Il est donc possible de mettre en oeuvre un protocole sans message d'accusé de réception, et donc permettant un débit beaucoup plus élevé que les protocoles mis en oeuvre dans les réseaux locaux à transmission radio de type connu.

D'autre part, l'intervalle de temps laissé libre entre deux messages émis par une même station permet non seulement la réémission de chaque message par le répéteur, mais permet en outre d'adjoindre à ce message des informations pour commander au moins une des interfaces d'émission-réception radio des stations.

Selon un mode de réalisation préférentiel, le réseau selon l'invention est caractérisé en ce que le répéteur comporte des moyens pour adjoindre à chaque message réémis des informations binaires pour commander au moins une station;
et en ce que chaque station comporte des moyens pour recevoir des informations binaires de commande, adjointes à un message qui est réémis par le répéteur.

Selon une autre caractéristique, le répéteur comporte des moyens pour émettre en outre, à son intiative, des messages de gestion du réseau à destination des stations; et chaque station comporte des moyens pour exécuter une instruction contenue dans un message de gestion qui lui est adressé.

Le réseau ainsi caractérisé permet au répéteur d'envoyer des messages de gestion, permettant notamment d'affectuer un réglage de la puissance d'émission de chaque station.

Selon un mode de réalisation préférentiel, chaque station comporte des moyens pour émettre avec une puissance réglable; cette puissance étant commandée par des messages de gestion que lui adresse le répéteur; et le répéteur comporte des moyens pour déterminer cette puissance de façon à obtenir une qualité donnée de la transmission entre l'émetteur et cette station.

Le réseau ainsi caractérisé permet d'optimiser la puissance émise par chaque station, de façon à minimiser les interférences entre plusieurs réseaux voisins, tout en assurant une qualité donnée de la transmission.

Selon un mode de réalisation particulier, le réseau selon l'invention est caractérisé en ce que le répéteur comporte en outre des moyens pour le coupler à au moins un réseau local filaire; ces moyens réémettant sur le réseau local filaire, au format correspondant à ce réseau, au moins une partie des messages radio émis par les stations; et réémettant sur le câble rayonnant des messages provenant du réseau filaire.

Le réseau ainsi caractérisé permet de faire communiquer au moins deux sous-réseaux : l'un constitué par des stations à transmission radio et l'autre constitué par des stations à transmission filaire. Ces dernières peuvent appliquer un protocole classique tel que celui normalisé par la norme IEEE8O2.3, connu sous la marque commerciale ETHERNET.

Différents moyens permettent de discriminer les messages émis par des réseaux voisins à transmission radio, selon l'invention. Un premier moyen consiste à les faire émettre dans des bandes de fréquence distinctes. Selon un autre mode de réalisation, le réseau selon l'invention est caractérisé en ce que :
- le répéteur comporte des moyens pour adjoindre à chaque message un mot binaire propre à ce réseau;
- et toutes les stations comportent des moyens pour détecter ce mot binaire dans chaque message reçu, et ne prendre en compte que les messages comportant le mot binaire propre au réseau considéré.

Cette caractéristique permet d'éviter qu'une station d'un réseau puisse prendre en compte des messages provenant d'un autre réseau, voisin et émettant dans la même bande de fréquence. Naturellement cette caractéristique n'empêche pas la collision éventuelle entre les messages émis par les deux réseaux, mais une telle collision est résolue par le mécanisme habituel de résolution des collisions entre deux stations appartenant à un même réseau.

L'invention sera mieux comprise et d'autres caractéristiques apparaîtront à l'aide de la description ci-dessous d'un exemple de réalisation du réseau selon l'invention, et des figures l'accompagnant :
- la figure 1 représente le schéma synoptique d'un exemple de réseau local à transmission radio selon l'art antérieur;
- la figure 2 représente le schéma synoptique d'un exemple de réalisation du réseau local à transmission radio selon l'invention;
- la figure 3 représente des chronogrammes illustrant la transmission d'un message dans cet exemple de réalisation du réseau selon l'invention;
- la figure 4 représente un schéma synoptique qui montre les moyens essentiels utilisés pour émettre un message sur une onde porteuse dans cet exemple de réalisation;
- les figures 5 à 7 représentent des oscillogrammes montrant le fonctionnement de ces moyens essentiels;
- la figure 8 représente des oscillogrammes illustrant la détection d'un signal émis par ces moyens essentiels;
- la figure 9 représente le schéma synoptique d'une station de cet exemple de réalisation;
- la figure 10 représente le schéma synoptique du répéteur de cet exemple de réalisation;
- la figure 11 représente le schéma synoptique d'un autre exemple de réalisation du réseau selon l'invention, comportant un sous-réseau à transmission radio et un sous-réseau à transmission filaire;
- la figure 12 représente le schéma synoptique du répéteur utilisé dans ce dernier exemple de réalisation.

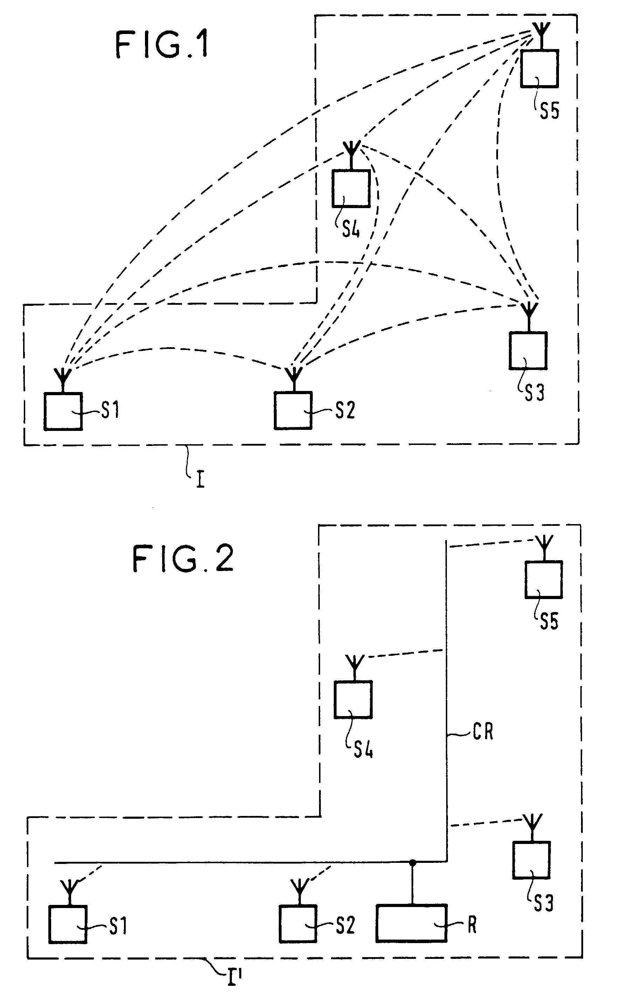

La figure 1 représente le schéma synoptique d'un exemple de réseau local à transmission radio de type connu. Dans un immeuble I, cinq stations S1, ..., S5 sont dispersées à différents endroits. Elles comportent chacune un terminal par exemple et une interface d'émission-réception radio, munie d'une antenne, qui lui permet de communiquer avec n'importe laquelle des autes stations. Les traits en pointillés symbolisent les liaisons radio qui peuvent être établies par les stations entre elles. Il apparaît sur cet exemple que les liaisons radio ont des longueurs très diverses, selon la position géographique des stations. Par exemple les messages émis dans la station S1 sont reçus avec une amplitude beaucoup plus grande par la station S2 qui est proche, que par la station S5 qui est éloignée. En outre, certaines stations peuvent être en vue directe, par exemple la station S1 et la station S2. Alors que d'autres stations communiquent à travers des cloisons et des murs, par exemple des stations S1 et S5. Il en résulte de grandes différences pour l'amplitude du signal reçu par chaque station.

La figure 2 représente le schéma synoptique d'un exemple de réalisation du réseau selon l'invention, dans le cas d'un immeuble I' identique à l'immeuble I, avec des stations S1, ..., S5 ayant respectivement les mêmes positions géographiques que pour le réseau précédent. Le réseau comporte un câble rayonnant CR qui parcourt tous les locaux en étant fixé au plafond par exemple, ou sur les cloisons, parallèlement au sol. Ce câble rayonnant CR est alimenté en un point situé approximativement à mi-longueur, par un répéteur R. Le câble rayonnant CR est utilisé alternativement en émission ou en réception.

Chaque station S1, ... S5 comporte une interface d'émission-réception radio identique, munie d'une antenne qui est toujours située à une faible distance du câble rayonnant CR parce que celui-ci passe dans tous les locaux. Les stations sont le plus souvent en vue directe du câble rayonnant CR. Lorsqu'une station émet un signal radio portant un message, ce signal est reçu par le câble rayonnant CR et est acheminé au répéteur R. Ce dernier attend la fin de ce message puis le réémet en modulant un autre signal radio fourni au câble rayonnant CR.

La propagation d'un signal radio le long du câble CR provoque une atténuation de ce signal, mais cette atténuation est parfaitement constante et déterminable. Les stations reçoivent donc les signaux radio avec une amplitude beaucoup plus constante que dans le cas d'une transmission radio directement de station à station.

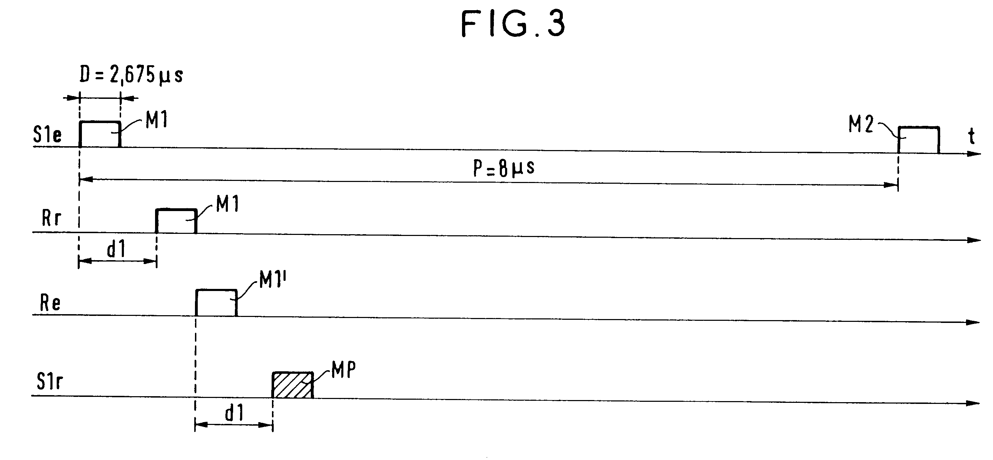

La figure 3 représente un chronogramme illustrant le protocole de transmission d'un message dans cet exemple de réalisation du réseau selon l'invention. Elle illustre en particulier le cas où la station qui a émis un message détecte une collision entre ce message et un message émis au même moment et dans la même bande de fréquence par une autre station. La ligne S1e montre l'émission de deux messages successifs M1 et M2, par une même station, par exemple la station S1. Chacun de ces messages a une durée D fixée à 2,675 µs, par exemple. L'intervalle de temps entre les débuts de deux messages consécutifs et différents a une durée fixée P = 8 µs. Tous les messages émis par les stations comportent, par exemple, 80 bits de données fournis par le terminal de la station émettant le message, et 16 bits de service fournis par l'interface d'émission-réception radio de cette station. Ces bits de service sont exploités par les interfaces d'émission-réception radio des stations et du répéteur pour signaler notamment :
- le sens de transmission du message (à destination ou en provenance du répéteur);
- la nature du message (message de transmission de données; message de gestion);
- l'identité du réseau auquel appartient la station ou le répéteur qui émet ce message.

La ligne Rr représente la réception du message M1 par le répéteur R, après un délai dl correspondant à la propagation entre la station S1 et le répéteur R, en suivant le chemin passant le câble rayonnant CR.

La ligne Re représente la réémission du message M1 par le répéteur R. Le répéteur R réémet le message M1 sous la forme d'un message M1', après un délai égal à la durée fixée D de ce message M1. D'autre part, il modifie le contenu des bits de service dans le message M1. Au moins un bit de service a pour fonction de distinguer le message M1', par rapport au message M1 provenant directement de la station S1.

La ligne S1r représente la détection de collision entre le message M1 et un autre message émis au même instant. La station S1 qui a émis le message M1 écoute le message M1' émis par le répéteur R pour vérifier que le message M1 a bien été réémis sans erreurs, notamment sans erreurs dûes à des interférences avec un autre message en cours d'émission par une autre station. Dans cet exemple, la station S1 reçoit un message après le délai de propagation D1, mais c'est un message brouillé MP qui n'est pas identique au message M1 qu'elle avait émis. La station S1 décide alors de différer le prochain message prévu, M2, et de réemettre un message M1 après un délai d'attente de durée aléatoire mais supérieur à 8 µs pour permettre au réseau de revenir à l'état de repos. Le message M1' réémis par le répéteur R est finalement reçu par la station destinataire après un délai de propagation d5, non représenté, entre le répéteur R et la station destinataire.

Il est à remarquer que l'intervalle de temps P, égal à 8 µs, entre l'émission de deux messages différents, M1 et M2, par la même station S1 est choisi supérieur à la somme des délais 2d1 + d5 nécessaire pour la réception complète du message M'1, par la station destinataire, en considérant les valeurs maximales des délais de propagation d1 et d5. Par exemple, si ces délais de propagation ont une durée maximale de 250 ns, correspondant à une distance de 50 mètres, la somme des délais de propagation dans cet exemple est au plus égale à 1 µs, à laquelle il faut ajouter la durée D = 2,675 µS du message M1'. Dans cet exemple, la durée totale de la transmission et de la réception du message est donc au plus de 3,675 µs. Elle reste donc bien inférieure à l'intervalle de temps P = 8 µs qui est prévu entre deux messages consécutifs.

Si chaque message M1, M2, etc contient 80 bits utiles, un intervalle P = 8 µs permet un débit de 10 Mb/s, ce qui est très supérieur au débit de 2 Mb/s procuré par des réseaux locaux à transmission radio de type connu.

Selon un mode de réalisation, le répéteur R peut adjoindre à chaque message réémis plusieurs bits constituant une instruction pour commander l'interface d'émission-réception radio de la station qui est destinataire du message auquel sont adjoints ces bits. L'interface d'émission-réception radio de la station destinataire reconnaît sa propre adresse, transmet le message à la station, et éxécute l'instruction contenue dans les bits adjoints au message. Selon une autre mode de réalisation, les bits adjoints à un message comportent une adresse désignant la station destinataire des bits adjoints, celle-ci pouvant être une station différente de la station destinataire du message, et cette dernière étant désignée par une autre adresse contenue dans le message.

Selon une variante de réalisation, le répéteur R peut émettre, à sa propre initiative, des messages de gestion du réseau, à destination des interfaces d'émission-réception radio des stations. Un message de gestion émis par le répéteur R peut comporter par exemple : 80 bits représentant une instruction et une adresse de station, et un bit indiquant que c'est un message provenant du répéteur. Au moyen d'un message de gestion, ou au moyen des bits supplémentaires adjoints à un message réémis, le répéteur R peut notamment commander la puissance d'émission de l'interface d'émission-réception radio, de chaque station, de façon à obtenir une qualité donnée de la transmission entre le répéteur et cette station. Dans le sens station-répéteur, cette qualité peut être définie par exemple en imposant une certaine amplitude du signal reçu par le répéteur. Dans le sens répéteur-station, la puissance d'émission peut être constante pour toutes les stations, afin de simplifier la gestion de l'interface d'émission-réception radio du répéteur R.

Parmi les bits supplémentaires adjoint à un message réémis, le répéteur peut adjoindre un mot binaire propre au réseau considéré. Chaque station ne prend en compte alors que les messages comportant : l'adresse de cette station, et un bit indiquant que ce message a été réémis par un répéteur, et le mot binaire propre au réseau auquel appartient la station considérée. Ce mot binaire permet donc d'éviter qu'une station du réseau considéré prenne en compte accidentellement des messages émis par le répéteur d'un autre réseau qui est voisin et émettant dans la même bande de fréquence.

Selon un mode de réalisation préférentiel, le répéteur et toutes les stations d'un réseau selon l'invention émettent dans une même bande de fréquence, s'étendant par exemple de 2,4 à 2,5 GHz en modulant une porteuse selon un premier procédé réalisant un étalement du spectre émis sur l'ensemble de cette bande. Ce procédé peut être du type à séquence directe, ou du type à sauts de fréquence. Selon un mode de réalisation préférentiel l'onde porteuse est modulée par une séquence directe, au moyen d'un corrélateur. Selon un mode de réalisation préférentiel de ce corrélateur, c'est un corrélateur analogique réalisé au moyen d'un dispositif à ondes de surface.

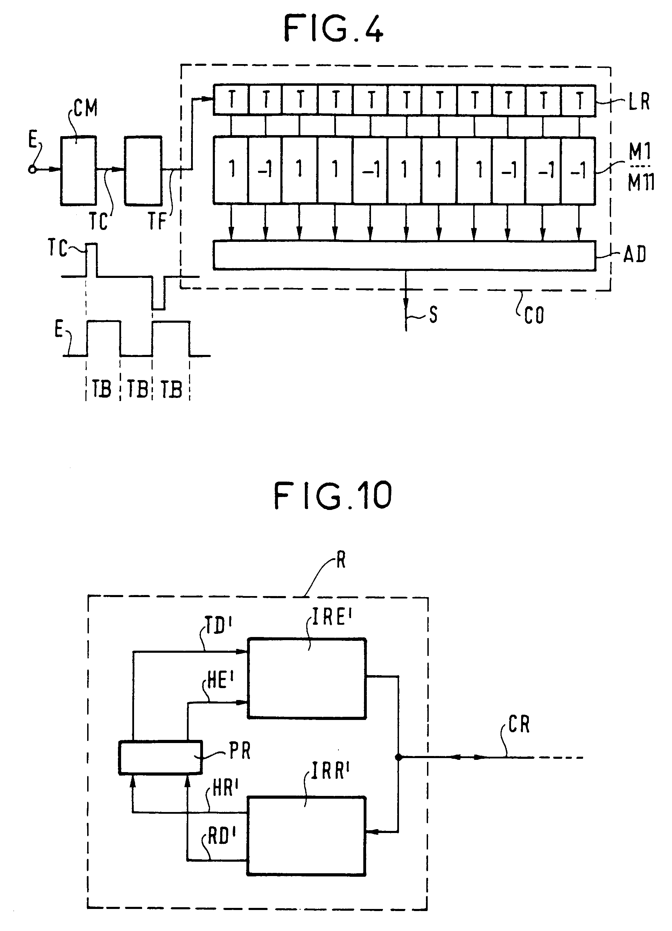

La figure 4 représente le schéma synoptique des moyens essentiels que comporte une interface d'émission-réception radio pour produire une onde porteuse modulée par un message.

Ces moyens essentiels comportent :
- un codeur CM recevant une suite de valeurs binaires E, avec une période de bit TB, et convertissant cette suite de valeurs en une suite d'impulsions TC suivant une loi de codage décrite plus loin;
- un circuit à onde surface OS, qui est un filtre classique fournissant un signal à haute fréquence ayant une enveloppe de forme gaussienne et ayant une durée T, lorsqu'il est excité par une impulsion; comportant une entrée reliée à une sortie du codeur CM, et comportant une sortie fournissant un signal TF à haute fréquence dont l'amplitude est modulée en tout ou rien par le signal TC issu du codeur CM;
- et un générateur de séquence, CO, constitué :
   -- d'une ligne à retard LR ayant une entrée reliée à la sortie du circuit OS, et ayant 11 sorties procurant respectivement 11 valeurs de retard avec un pas constant égal à T;
   -- 11 dispositifs M1, ..., M11 permettant de multiplier respectivement les signaux fournis par les 11 sorties de la ligne à retard LR par une suite de coefficients +1 ou -1, ce qui équivaut à créer un déphasage de O° ou 180°;
   -- et un dispositif AD ayant 11 entrées reliées respectivement à une sortie de chacun des dispositifs M1, ..., M11 et ayant une sortie fournissant un signal S à haute fréquence, qui est modulé par la suite de valeurs binaires E.

La suite des coefficients +1 ou -1 est constituée par une séquence dite de Barker. Une telle séquence est connue comme ayant la propriété de fournir un pic de corrélation très marqué, lors de sa détection par un filtre transverse ayant des coefficients correspondant à cette séquence. Dans cet exemple, la séquence de Barker utilisée comporte 11 coefficients qui sont respectivement :
1, -1, 1, 1, -1, 1, 1, 1, -1, -1, -1

Il existe quelques autres séquences de Barker comportant 11 coefficients ou 13 coefficients et qui peuvent être utilisés aussi.

Chaque salve du signal haute fréquence TF délivré par le circuit OS est restituée par les 11 sorties de la ligne à retard LR avec des retards croissants, et est modulée en phase par une modulation sautant de O° à 180°, au moyen des dispositifs M1, ..., M11. Le dispositif AD fait l'addition des salves 11 ainsi modulées.

La forme d'onde provenant du circuit OS et circulant dans le générateur de séquence de Barker CO est dépendante de la polarité du signal TC, donc le signal S est dépendant de la suite de valeurs E.

Le codeur CM sépare la suite de valeurs binaires E, au rythme TB, en une série de bits de rang pairs et une série de bits de rangs impairs au rythme de TB/2, deux bits consécutifs à l'état 1 sur chacun de ces rangs se traduisent par la génération de deux impulsions TC de polarités inverses et de durées faibles devant la durée TB. Un état O se traduit par une absence d'impulsion. Les deux séries d'impulsions correspondant respectivement aux bits de rang pair et de rang impair sont entrelacées et constituent une série d'impulsions de codage au rythme TB.

Il faut noter que la durée T du pas de la ligne à retard LR est choisie égale à la durée TB de la période des bits à transmettre.

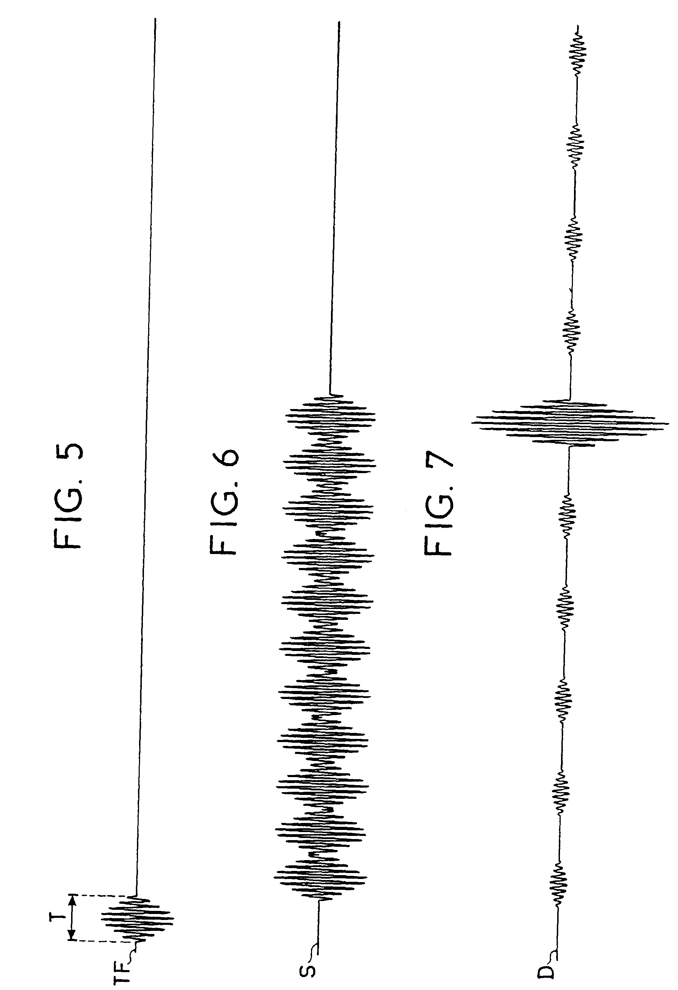

La figure 5 représente l'oscillogramme du signal TF fourni par le circuit OS au générateur CO, pour une impulsion unique, de durée TB, appliquée à l'entrée du codeur CM. C'est un signal sinusoïdal à haute fréquence qui est modulé en amplitude par une courbe de Gauss ayant une durée égale au pas T des retards procurés par la ligne à retard LR.

La figure 6 représente le graphe en fonction du temps du signal S fourni par la sortie du générateur de séquence, CO. Il s'agit d'un signal sinusoïdal à haute fréquence qui est modulé en amplitude onze fois de suite par une courbe de Gauss ayant une durée égale au pas T des retards procurés par la ligne à retard LR. Il est aussi modulé en phase par des sauts de 180°, qui s'effectuent lorsque la valeur du signal est nulle. Le signal haute fréquence ainsi modulé peut être démodulé sans nécessiter une récupération de la porteuse ni une récupération de l'horloge des bits transmis, grâce à la facilité d'obtenir un pic de corrélation sur ce signal modulé. D'autre part, ce signal modulé a un spectre étalé dans une large bande de fréquence, ce qui permet de bénéficier des avantages d'une transmission radio à spectre étalé, en particulier une réduction des brouillages.

Le procédé de modulation décrit précédemment présente l'avantage de permettre une démodulation particulièrement simple au moyen d'un corrélateur adapté au générateur CO utilisé pour la modulation.

La figure 7 représente le graphe du signal D fourni par la sortie d'un corrélateur adapté au générateur CO, lorsque le signal représenté sur la figure 6 est appliqué à l'entrée de ce corrélateur adapté. Après un délai égal à 11 T, la sortie du corrélateur fournit un pic de corrélation constitué d'une brève salve de signal à haute fréquence, ayant une durée inférieure à T, alors que pendant l'intervalle de 0 à 10 T, et de 12 T à 22 T, elle ne fournit que des salves d'amplitude négligeable, égale à 1/11 si on attribue la valeur 11 au pic de corrélation. Il est donc possible de détecter un signal à haute fréquence modulé par une séquence de Barker donnée, pour transmettre un message constitué d'un seul bit.

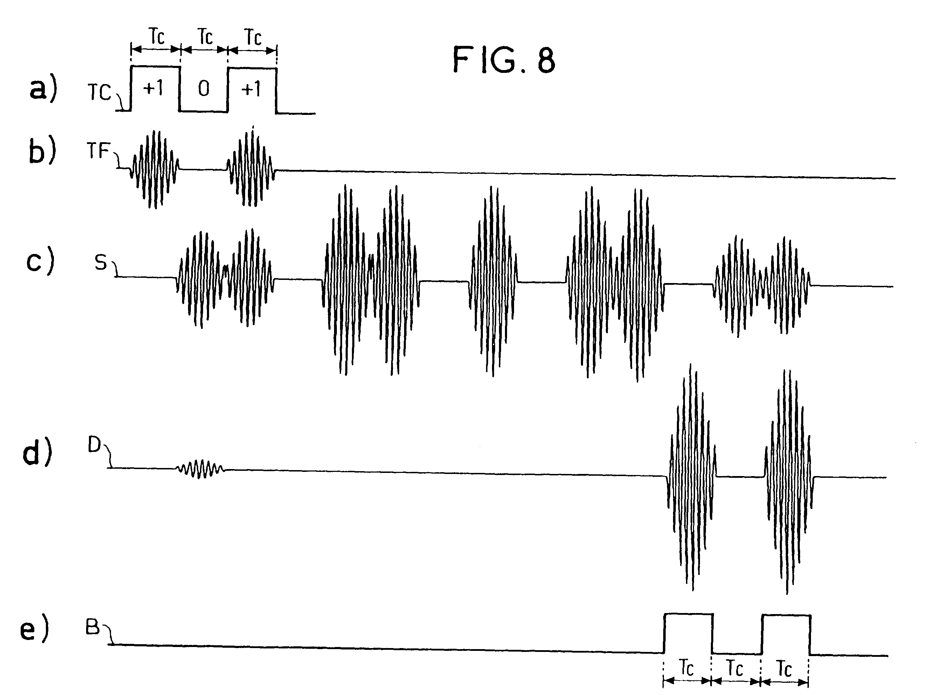

La figure 8 représente des chronogrammes illustrant les différentes étapes de la transmission d'un message comportant plusieurs bits.

Considérons par exemple un message qui, après codage par le codeur CM, est représenté par deux impulsions de valeur + 1 séparées par un retour à la valeur O, chaque valeur ayant une durée T_{c}. La ligne a de la figure 8 représente le signal TC fourni par la sortie du codeur CM et qui prend donc les valeurs +1, O, +1.

La ligne b représente le signal TF, à la sortie du circuit OS. Il est constitué de deux salves de signal à haute fréquence, chaque salve étant modulée en amplitude par une courbe de Gauss, et ayant une durée égale Tc. Elles sont séparées par un retour à la valeur O pendant une durée Tc.

La ligne c représente le signal S en sortie du générateur CO. Ce signal S est constitué de neuf salves de signal à haute fréquence, modulées en amplitude et en phase, s'étendant sur une durée totale égale à 13 x T_{c}.

La ligne d représente le signal D fourni par la sortie d'un corrélateur adapté, utilisé dans le répéteur R pour détecter le signal S émis par une station. Dans cet exemple le signal D comporte une salve de signal à haute fréquence, d'amplitude négligeable, puis deux salves de signal à haute fréquence, de forte amplitude, dont la durée totale est égale à 13 x T_{c}.

La ligne e représente un signal binaire B obtenu à partir du signal D en détectant son enveloppe puis en comparant cette enveloppe à une valeur de seuil fixée. Le signal B comporte deux impulsions au niveau haut, ayant chacune une durée T_{c}, séparées par un intervalle au niveau bas, de durée T_{c}. Le signal B ainsi obtenu restitue les informations binaires qui étaient portées par le signal TC.

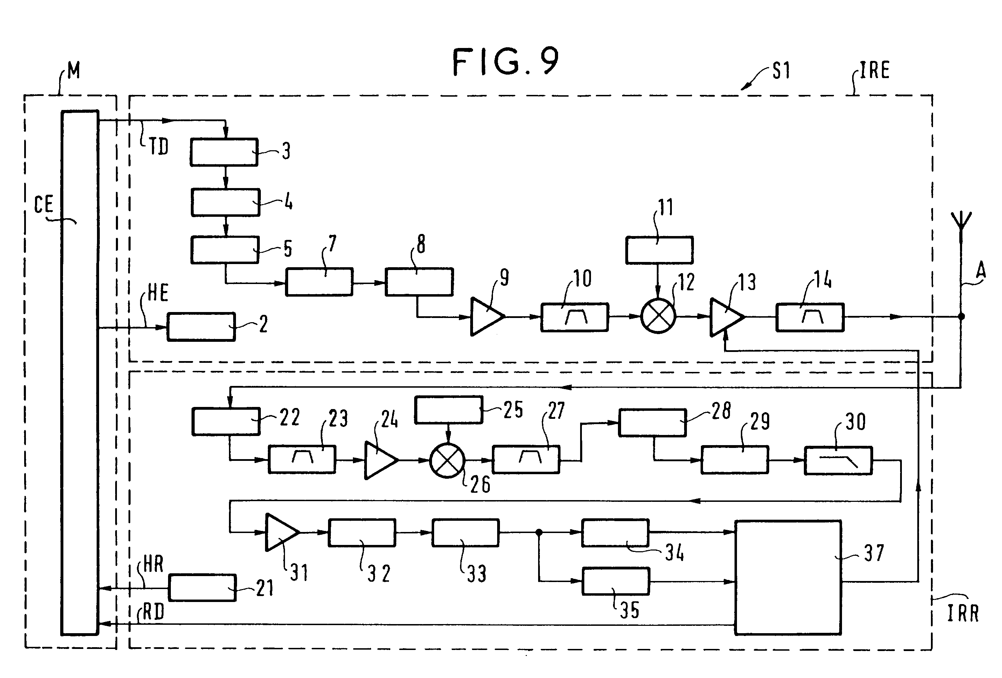

La figure 9 représente le schéma synoptique d'une station, par exemple la station S1, et notamment le schéma synoptique de la partie émission IRE et de la partie réception IRR de l'interface d'émission-réception radio de cette station. Cette station comporte en outre une machine informatique M qui est équipée notamment d'un coupleur CE permettant d'appliquer le protocole normalisé par la norme IEEE8O2.3, et qui est habituellement relié à un bus pour constituer un réseau local du type à détection de porteuse et à détection de collision. En l'occurrence ce coupleur CE comporte deux sorties reliées respectivement à deux entrées, HE et TD de la partie émission IRE de l'interface, et deux entrées reliées respectivement à deux sorties HR et RD de la partie réception IRR de l'interface.

Selon un mode de réalisation le coupleur CE a notamment pour fonction de reconnaître l'adresse de la station dans un message. L'interface d'émission réception radio de la station peut donc lui transmettre tous les messages ayant été émis par le répéteur, sans faire de tri sur l'adresse de station destinataire. Le fonctionnement du coupleur CE est légèrement différent du fonctionnement d'un coupleur classique relié à un réseau filaire, puisque la détection de collision n'a pas lieu au moment de l'émission d'un message par la station, mais au moment de la réémission de ce message par le répéteur, la détection de collision étant réalisée en vérifiant l'intégralité du message émis par le répéteur à la suite de l'émission émis par la station.

La durée Tc des salves correspondant respectivement aux transitions du signal binaire est choisie égale à la durée TB de la période des bits. Le pas T des lignes à retard des corrélateurs de modulation et de démodulation est choisi égal à la période de bit TB. A titre d'exemple, TB = 25 ns = Tc. Il est à remarquer sur cet exemple, qu'une suite binaire avec des transitions toutes les 25 ns est transmise en appliquant à un corrélateur une suite de salves ayant chacune une durée de 25 ns, avec une période de 25 ns, alors que la durée de propagation dans la ligne à retard de ce corrélateur est égale à 11 x 25 ns. La transmission de 80 bits dure donc 2000 + 275 ns, les 275 ns correspondant au vidage de la ligne à retard du générateur de séquence. La durée totale est donc de 2 275 ns auxquelles il convient d'ajouter la durée de 16 bits de services de durée élémentaire de 25 ns, soit 400 ns. La durée totale du message est donc de 2 675 ns. Ces transmissions sont réitérées toutes les 8 microsecondes.

La partie émission IRE comporte :
- un séquenceur 2, ayant une entrée reliée à l'entrée HE;
- une mémoire tampon 3 du type premier-entré-premier-sorti, ayant une entrée reliée à la borne d'entrée TD qui lui fournit un message;
- un dispositif 4 de calcul de code à redondance cyclique, ayant une entrée reliée à une sortie de la mémoire tampon 3;
- un dispositif 5 de codage, par exemple de type Manchester, ayant une entrée reliée à une sortie du dispositif 4;
- un circuit à onde de surface, 7, constituant un filtre classique fournissant une salve de signal à haute fréquence dont l'enveloppe a une forme gaussienne ayant une durée T = 25 nS, et dont la fréquence est de 320 MHz; ayant une entrée reliée à une sortie du dispositif 5;
- un générateur de séquence de Barker à 11 bits, 8, ayant une entrée reliée à la sortie du circuit 7;
- un amplificateur 9 ayant une entrée reliée à la sortie du générateur 8;
- un filtre passe-bande 10 laissant passer les fréquences de 250 à 400 MHz, ayant une entrée reliée à la sortie de l'amplificateur 9;
- un oscillateur 11 ayant une fréquence fixe de 2,1 GHz;
- un mélangeur 12 ayant une entrée reliée à la sortie du filtre 10 et une entrée reliée à la sortie de l'oscillateur 11, pour transposer le signal modulé autour de la fréquence de 2,45 GHz;
- Un amplificateur 13 ayant une entrée reliée à une sortie du mélangeur 12, et une entrée de commande de gain reliée à une sortie de la partie réception IRR;
- un filtre passe-bande 14 laissant passer les fréquences de 2,4 GHz à 2,5 GHz, ayant une entrée reliée à la sortie de l'amplificateur 13 et ayant une sortie couplée à une antenne A qui est utilisée alternativement pour l'émission et pour la réception.

Le séquenceur 2 est relié, par des liaisons non représentées, à la mémoire tampon 3 et aux dispositifs 4 et 5 pour synchroniser leur fonctionnement sur le rythme d'une horloge fournie par le coupleur CE à l'entrée HE, au rythme des données binaires qu'il fournit à l'entrée TD.

La partie réception IRR comporte :
- un dispositif de protection 22 ayant une entrée reliée à l'antenne A, et qui est destiné à protéger la partie réception IRR contre des surtensions dûes à l'émission par la partie émission IRE;
- un filtre passe bande 23 laissant passer les fréquences de 2,4 à 2,5 GHz, et ayant une entrée reliée à une sortie du dispositif de protection 22;
- un amplificateur 24 ayant une entrée reliée à une sortie du filtre 23;
- un oscillateur 25, ayant une fréquence fixe de 2,1 GHz et une amplitude constante;
- un mélangeur 26 ayant une entrée reliée à la sortie de l'amplificateur 24 et une entrée reliée à la sortie de l'oscillateur 25, pour transposer la fréquence du signal reçu;
- un filtre passe-bande 27 laissant passer les fréquences de 250 à 400 MHz, et ayant une entrée reliée à une sortie du mélangeur 26;
- un corrélateur analogique 28 ayant une entrée reliée à la sortie du filtre 27;
- un dispositif 29 de détection d'amplitude ayant une entrée reliée à une sortie du corrélateur 28;
- un filtre passe-bas 30 ayant une bande passante limitée à 40 MHz pour restituer un signal représentant l'enveloppe du pic de corrélation fourni par la sortie du corrélateur 28;
- un amplificateur 31 ayant une entrée reliée à une sortie du filtre passe-bas 30;
- un comparateur 32 ayant une entrée reliée à une sortie de l'amplificateur 31, et ayant pour fonction de remettre en forme le signal fourni par l'amplificateur 31;
- une bascule 33 ayant une entrée reliée à une sortie du comparateur 32 pour échantillonner le signal logique fourni par cette sortie, à un instant défini par un signal d'horloge;
- un dispositif 34 de calcul de code à redondance cyclique ayant une entrée reliée à la sortie de la bascule 33;
- une mémoire tampon 35 du type premier-entré-premier-sorti, ayant une entrée reliée à la sortie de la bascule 33;
- un processeur 37, ayant : une entrée reliée à une sortie du dispositif 34, une entrée reliée à la sortie de la mémoire tampon 35, une sortie reliée à la borne de sortie RD constituant la sortie de la partie réception IRR, et une sortie reliée à une entrée de commande de gain de l'amplificateur 13 dans la partie émission IRE;
- et un séquenceur 21 qui est relié, par des liaisons non représentées, au corrélateur 28, aux dispositifs 33 à 35, et au processeur 37 pour leur fournir des signaux d'horloge; et qui est reliée à la borne de sortie HR pour fournir au coupleur CE un signal d'horloge.

Le processeur 37 fournit une suite de données binaires constituant un message, à la sortie RD, à un rythme défini par le séquenceur 21. Le séquenceur 21 fournit simultanément un signal d'horloge à la sortie HR, au même rythme.

Le générateur 8 et le corrélateur 28 sont adoptés l'un à l'autre, car ils sont conçus pour une même séquence de Barker comportant 11 bits dans cet exemple. Ce sont des corrélateurs analogiques à ondes de surface. Ils sont constitués chacun d'un substrat piézoélectrique sur lequel sont déposées des électrodes. Chaque sortie de la ligne à retard est constituée par une électrode, chaque retard étant constitué par un délai de propagation entre deux électrodes consécutives. Les caractéristiques géométriques de chaque électrode déterminent la phase et l'amplitude du signal recueilli par cet électrode. Chaque électrode est réalisé de façon à obtenir un déphasage de O° ou de 180°, selon l'électrode considérée. L'addition des 11 signaux recueillis respectivement par les 11 électrodes est réalisée simplement en reliant les électrodes à une même sortie.

Ce mode de réalisation analogique est particulièrement simple, puisqu'il n'est pas nécessaire de récupérer la fréquence de porteuse, ni le rythme des bits, et puisque le corrélateur utilisé pour la modulation est identique au corrélateur utilisé pour la démodulation. Le changement de fréquence au moyen de l'oscillateur 11 et du mélangeur 12 permet de faire travailler le corrélateur 8 à une fréquence inférieure à 800 MHz. De même, le changement de fréquence au moyen de l'oscillateur 25 et du mélangeur 26 permet de faire travailler le corrélateur 28 à une fréquence inférieure à 800 MHz.

Le processeur 37 procure à la partie réception une certaine capacité de traitement. Il retransmet à la borne de sortie RD chaque message que lui fournit la mémoire 35 après avoir vérifié que ce message comporte bien le bit indiquant qu'il a transité par le répéteur R.

Le processeur 37 adjoint à chaque message un indicateur indiquant si le dispositif 34 a détecté une erreur ou pas. C'est le coupleur CE qui a la fonction de reconnaître l'adresse de la station dans un message reçu, et d'émettre un message demandant une répétition du message reçu si le dispositif 34 a détecté une erreur dûe à une collision par exemple. Selon une variante de réalisation, ces fonctions peuvent être remplies par le processeur 37 de l'interface d'émission-réception radio, au moyen d'un programme adéquat.

Enfin, le processeur 37 a pour fonction d'interprêter les bits de commande adjoints par le répéteur R à messages émis par des stations, et d'interprêter les messages purement de gestion qui sont émis par le répéteur R. Une fonction de gestion consiste à commander la puissance émise par l'amplificateur 13, en réglant son gain de telle façon que le répéteur reçoive les messages de cette station avec une qualité donnée. Ainsi le récepteur du répéteur travaille avec une dynamique réduite, donc dans des conditions optimales.

Pour faire cohabiter dans un même immeuble plusieurs réseaux locaux indépendants mais utilisant la même bande de fréquence, il est envisageable d'utiliser une séquence de Barker différente pour chacun des réseaux, puisqu'on connaît plusieurs séquences de Barker différentes, comportant 11 ou 13 bits. Cependant cette solution a l'inconvénient de nécessiter la réalisation de corrélateurs analogiques différents pour chacun des réseaux, puisque les électrodes de chaque corrélateur ont des caractéristiques géométriques qui sont fonction de la séquence de Barker utilisée.

Un autre procédé utilisable de préférence consiste à émettre, en plus de l'adresse de la station destinataire d'un message, une adresse désignant le réseau auquel appartient la station destinataire du message. Cette adresse de réseau peut être adjointe au message par un générateur de bits de contrôle, chaque fois qu'un message est émis par la partie émission IRE de l'interface émission-réception radio. Ce générateur de bits peut être relié à l'entrée de la mémoire 3 de la partie émission IRE de l'interface. L'adresse de réseau est reconnue au moyen du processeur 37 de la partie réception IRR. Le processeur ne retransmet un message à la borne de sortie RD que s'il a reconnu l'identité du réseau auquel il appartient.

L'exemple de réalisation décrit précédemment présente l'avantage d'être simple, grâce à l'utilisation de corrélateurs analogiques. Une variante de réalisation plus complexe peut comporter deux corrélateurs numériques, ou un autre type de dispositif de modulation, de type connu, permettant de réaliser un étalement de spectre.

La figure 9 représente le schéma synoptique d'un répéteur R. Il comporte un processeur PR et une interface d'émission-réception radio comportant une partie émission IRE' analogue à la partie IRE décrite précédemment pour une station, et une partie réception IRR' analogue à la partie IRR décrite précédemment pour une station. La partie émission IRE' et la partie réception IRR' possède respectivement une sortie et une entrée couplée au câble rayonnant CR. La partie émission IRE' possède deux entrées TD' et HE' reliées respectivement à deux sorties du processeur PR. La partie réception IRR' possède deux sorties HR' et RRD' qui sont reliées respectivement à deux entrées du processeur PR.

Lorsque la partie réception IR' reçoit un message, destiné à une station quelconque, il fournit la suite de valeurs binaires constituant ce message sur sa sortie DR', et fournit un signal d'horloge correspondant sur sa sortie HR'. Le processeur PR stocke ce message dans une mémoire tampon interne pendant une durée égale à la durée fixée pour un message. Lorsque ce délai a expiré, le message en cours de réception est terminé, il peut donc être réémis. Le processeur PR fournit ce message à l'entrée TD' de la partie émission IRE', et il fournit simultanément un signal d'horloge à l'entrée HE'. Le processeur PR adjoint à ce message un bit supplémentaire B indiquant que le message est réémis par le répéteur. Eventuellement en outre d'autres bits supplémentaires sont adjointes sont ajoutés pour commander l'interface radio de la station qui est destinataire du message. Par ailleurs, le processeur PR peut émettre de sa propre initiative des messages de gestion à destination des stations.

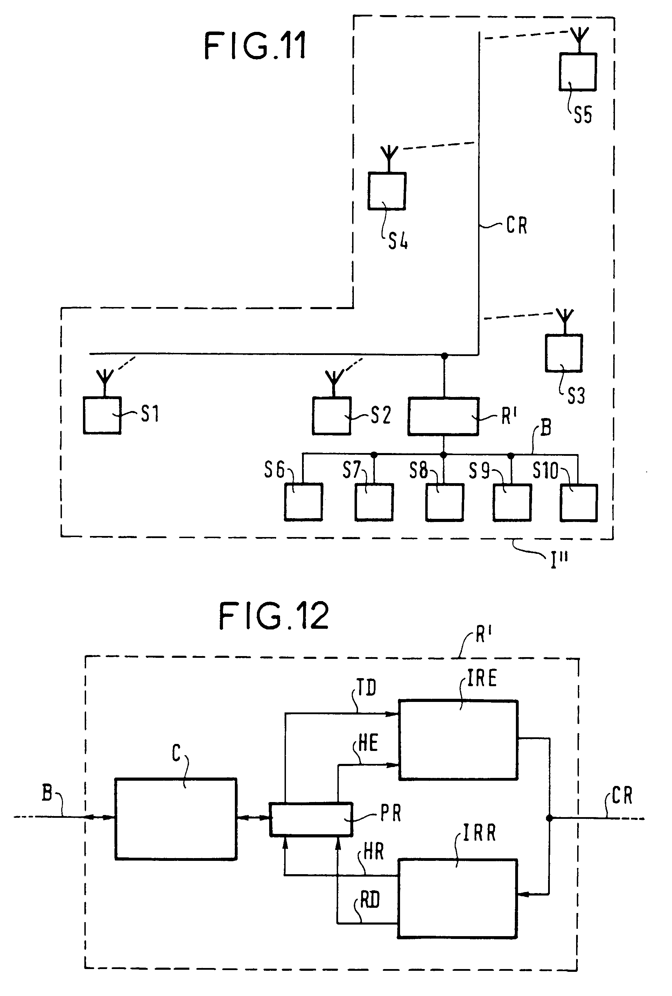

La figure 10 représente le schéma synoptique d'un autre exemple de réalisation du réseau selon l'invention, comportant un sous-réseau à transmission radio constitué de stations S1, ..., S5, et d'un sous réseau à transmission filaire constitué de stations S6 à S10. Le réseau comporte un répéteur R' qui est couplé d'une part à un câble rayonnant CR et d'autre part à un bus B.

La figure 11 représente le schéma synoptique du répéteur R' utilisé dans cette variante de réalisation. Le répéteur R' comporte les mêmes éléments que le répéteur R représenté sur la figure 9 et décrit précédemment, plus un coupleur C qui est relié d'une part au bus B et d'autre part au processeur PR décrit précédemment. Par exemple, le sous-réseau filaire met en oeuvre un protocole selon la norme IEE802.3 et le coupleur C applique alors ce protocole. Le répéteur R' est vu par le sous-réseau filaire comme une station particulière comportant un coupleur C qui accepte les messages adressés aux stations S1 à S5, et les retransmet au processeur PR pour qu'ils soient émis sur le câble rayonnant CR. Réciproquement les messages reçus sur le câble rayonnant CR et transitant par le processeur PR sont fournis au coupleur C pour déterminer si la station destinataire est l'une des stations S6 à S10 du sous-réseau filaire. Si c'est le cas, ce message est retransmis par le coupleur C sur le bus B.

## Revendications

1. Réseau local à transmission radio, comportant plusieurs stations (S1, ...S4) comportant chacune des moyens (IRR, IRE) pour émettre et recevoir des messages radio; et comportant un répéteur (R) pour réémettre chaque message émis par une station, ce répéteur étant couplé à un câble rayonnant (CR) passant à proximité de toutes les stations; et chaque station comportant des moyens (37) pour ne traiter que les messages qui lui sont adressés et qui ont été réémis par le répéteur ;
caractérisé en ce que le répéteur reçoit et réémet les messages des stations dans une même bande de fréquence, en alternat, mais adjoint à chaque message réémis au moins une information indiquant que le message a transité par le répéteur ;
et en ce chaque station comporte des moyens (37) pour ne prendre en compte que les messages contenant une information indiquant que le message a transité par le répéteur.

2. Réseau selon la revendication 1, caractérisé en ce chaque station comporte des moyens (2) pour émettre chaque message avec une durée prédéterminée (D);
en ce que le répéteur (R) comporte des moyens (PR) pour réémettre chaque message après un délai prédéterminé, au moins égal à la durée fixée (D) pour le message;
et en ce que chaque station comporte des moyens (CE) pour, lorsqu'elle a émis un message, comparer le message qu'elle reçoit ensuite, en provenance du répéteur, avec le message qu'elle a émis, et réitérer l'émission de ce message avec un délai pseudo-aléatoire, si la comparaison ne conclut pas qu'ils sont identiques.

3. Réseau selon la revendication 1, caractérisé en ce que le répéteur (R) comporte des moyens pour adjoindre à chaque message réémis des informations binaires pour commander au moins une station;
et en ce que chaque station comporte des moyens (37) pour recevoir des informations binaires de commande, adjointes à un message qui est réémis par le répéteur.

4. Réseau selon la revendication 1, caractérisé en ce que le répéteur (R) comporte des moyens pour émettre en outre à son initiative des messages de gestion du réseau, à destination des stations; et en ce que chaque station comporte des moyens (37) pour exécuter une instruction contenue dans un message de gestion qui lui adressé.

5. Réseau selon la revendication 4, caractérisé en ce que chaque station comporte des moyens pour émettre avec une puissance réglable; cette puissance étant commandée par des messages de gestion que lui adresse le répéteur;
et en ce que le répéteur comporte des moyens (P) pour déterminer cette puissance de façon à obtenir une qualité donnée de la transmission entre le répéteur et cette station.

6. Réseau selon la revendication 1, caractérisé en ce que le répéteur (R') comporte en outre des moyens (C) pour le coupler à au moins un réseau local filaire (B, S6 à S10); ces moyens réémettant sur le réseau local filaire, au format correspondant à ce réseau, au moins une partie des messages radio émis par des stations (S1 à S5);
et réémettant sur le câble rayonnant (CR) des messages provenant du réseau filaire.

7. Réseau selon la revendication 3, caractérisé en ce que :
- le répéteur comporte des moyens (PR) pour adjoindre à chaque message un mot binaire propre à ce réseau;
- toutes les stations comportent des moyens (37) pour détecter ce mot binaire dans chaque message reçu. et ne prendre en compte que les messages comportant le mot binaire propre au réseau auquel appartiennent ces stations.

8. Réseau selon la revendication 7, caractérisé en ce le répéteur et toutes les stations comportent des moyens (6 à 14) pour émettre dans toute la largeur de ladite bande en mettant en oeuvre un procédé d'étalement de spectre.

9. Réseau selon la revendication 8, caractérisé en ce le répéteur et les stations comportent, pour l'émission :
- une source (6) délivrant des salves de signal à haute fréquence ayant une durée prédéterminée et une modulation d'amplitude de forme gaussienne;
- un générateur (8) de séquence de Barker, traitant les salves délivrées par la source (6);
- des moyens (1 à 4) pour coder les messages à transmettre, sous la forme d'un signal binaire ayant une période de bit fixée et un nombre de bits fixé, ce signal binaire commandant la source (6);
et comportent pour la réception :
- un corrélateur (28) dont les coefficients de pondération sont des valeurs binaires ± 1 constituant une séquence de Barker adaptée à celle utilisée pour l'émission;
- des moyens (29 à 37) pour décoder les messages reçus, à partir d'un signal fourni par le corrélateur (28).

10. Réseau selon la revendication 9 caractérisé en ce que le générateur (8) de séquence de Barker pour l'émission et le corrélateur (28) pour la réception sont constitués chacun d'un dispositif à ondes de surface comportant des électrodes dont les caractéristiques géométriques correspondent aux valeurs binaires de ladite suite de Barker.

11. Réseau selon la revendication 1, caractérisé en ce que chaque station comporte des moyens (4) pour calculer et insérer dans chaque message qu'elle émet au moins un bit de détection d'erreur;
et comporte des moyens (34) pour calculer un bit de détection d'erreur à partir de chaque message qu'elle reçoit; le comparer à celui contenu dans ce message; et éventuellement émettre un message demandant la répétition du dernier message qui lui a été adressé, si la comparaison fait apparaître que ce dernier message comporte une erreur.

12. Station pour un réseau local à transmission radio selon l'une des revendications 1 à 11, le réseau comportant un répéteur pour réémettre chaque message émis par une station du réseau, ce répéteur étant couplé à un câble rayonnant passant à proximité de toutes les stations du réseau, le station comportant des moyens (37) pour émettre et recevoir des messages radio et pour ne traiter que les messages qui lui sont adressés et qui ont été réémis par le répéteur caractérisé en ce que lesdits moyens de la station sont agencés pour ne prendre en compte que les messages contenant une information indiquant que le message a transité par le répéteur.

13. Répéteur pour un réseau local à transmission radio comportant plusieurs stations selon l'une des revendications 1 à 11, le répéteur étant couplé à un câble rayonnant passant à proximité de toutes les stations du réseau, caractérisé en ce que le répéteur reçoit et réémet les messages des stations dans une même bande de fréquence, en alternat, mais adjoint à chaque message réémis au moins une information indiquant que le message a transité par le répéteur.

## Patentansprüche

1. Drahtloses lokales Netzwerk, mehreren Stationen (S1, ..., S4),von denen jede Mittel (IRR, IRE) zum Senden und Empfangen von Funkmeldungen aufweist, mit einem Wiederholer (R) zum Wiederaussenden jeder von einer Station gesendeten Meldung, wobei der Wiederholer an ein Funkkabel (CR) gekoppelt ist, das in der Nähe aller Stationen verläuft, und wobei jede Station Mittel (37) zum Bearbeiten nur der an sie adressierten und vom Wiederholer wiederausgesendeten Meldungen aufweist,
dadurch gekennzeichnet, daß der Wiederholer die Meldungen der Stationen in ein und demselben Frequenzband abwechselnd empfängt und wieder aussendet, aber zu jeder wiederausgesendeten Meldung wenigstens eine Information zufügt, die angibt, daß die Meldung den Wiederholer durchlaufen hat, und daß jede Station Mittel (37) aufweist, um nur die Meldungen zu berücksichtigen, die eine Information enthalten, die angibt, daß die Meldung den Wiederholer durchlaufen hat.

2. Netzwerk nach Anspruch 1, dadurch gekennzeichnet, daß jede Station Mittel (2) zum Senden jeder Meldung mit einer vorgegebenen Dauer (D) aufweist, daß der Wiederholer (R) Mittel (PR) zum Wiederaussenden jeder Meldung nach einer vorgegebenen Verzögerung wenigstens gleich der für die Meldung festgelegten Dauer (D) aufweist, und daß jede Station Mittel (CE) besitzt, um, wenn sie eine Meldung gesendet hat, die Meldung, die sie anschließend vom Wiederholer kommend empfängt, mit der Meldung zu vergleichen, die sie gesendet hat, und das Senden dieser Meldung mit einer pseudozufälligen Verzögerung zu wiederholen, wenn der Vergleich nicht ergibt, daß sie identisch sind.

3. Netzwerk nach Anspruch 1, dadurch gekennzeichnet, daß der Wiederholer (R) Mittel zum Hinzufügen von Binärinformation zum Steuern wenigstens einer Station zu jeder wiederausgesendeten Meldung aufweist, und daß jede Station Mittel (37) zum Empfangen der einer vom Wiederholer wiederausgesendeten Meldung hinzugefügten binären Steuerinformation besitzt.

4. Netzwerk nach Anspruch 1, dadurch gekennzeichnet, daß der Wiederholer (R) Mittel aufweist, um ferner auf seine Initiative Netzwerkverwaltungsmeldungen an die Stationen zu senden, und daß jede Station Mittel (37) zum Ausführen einer in einer an sie adressierten Verwaltungsmeldung enthaltenen Anweisung besitzt.

5. Netzwerk nach Anspruch 4, dadurch gekennzeichnet, daß jede Station Mittel zum Senden mit einer regelbaren Leistung aufweist, wobei diese Leistung durch Verwaltungsmeldungen geregelt ist, die der Wiederholer an sie adressiert, und daß der Wiederholer Mittel (P) zum Bestimmen dieser Leistung derart, daß eine gegebene Übertragungsqualität zwischen dem Wiederholer und dieser Station erhalten wird, besitzt.

6. Netzwerk nach Anspruch 1, dadurch gekennzeichnet, daß der Wiederholer (R') ferner Mittel (C) aufweist, um ihn an wenigstens ein leitungsgebundenes lokales Netzwerk (B, S6 bis S10) zu koppeln, wobei diese Mittel auf dem leitungsgebundenen lokalen Netzwerk in dem diesem Netzwerk entsprechenden Format wenigstens einen Teil der von den Stationen (S1 bis S5) gesendeten Funkmeldungen wieder aussenden, und auf dem Funkkabel (CR) vom leitungsgebundenen Netzwerk kommende Meldungen wieder aussenden.

7. Netzwerk nach Anspruch 3, dadurch gekennzeichnet, daß:
- der Wiederholer Mittel (PR) zum Hinzufügen eines diesem Netzwerk eigentümlichen binären Worts zu jeder Meldung aufweist,
- alle Stationen Mittel (37) zum Erfassen dieses Binärworts in jeder empfangenen Meldung und zum Berücksichtigen nur derjenigen Meldungen umfassen, die das dem Netzwerk, zu dem die Stationen gehören, eigentümliche Binärwort besitzen.

8. Netzwerk nach Anspruch 7, dadurch gekennzeichnet, daß der Wiederholer und alle Stationen Mittel (6 bis 14) zum Senden auf der gesamten Breite des Bandes unter Verwendung eines Spektralverbreiterungsverfahrens besitzen.

9. Netzwerk nach Anspruch 8, dadurch gekennzeichnet, daß der Wiederholer und die Stationen zum Senden aufweisen:
- eine Quelle (6), die Hochfrequenz-Signalsalven mit einer vorgegebenen Dauer und einer gaussförmigen Amplitudenmodulation abgibt,
- einen Barker-Sequenzgenerator (8), der die von der Quelle (6) abgegebenen Salven verarbeitet,
- Mittel (1 bis 4) zum Codieren der zu übertragenden Meldungen in Form eines Binärsignals mit einer festgelegten Bitperiode und einer festgelegten Bitzahl, wobei dieses Binärsignal die Quelle (6) steuert, und zum Empfangen aufweisen:
- einen Korrelator (28), dessen Gewichtungskoeffizienten Binärwerte ± 1 sind, die eine Barker-Sequenz bilden, die an die zum Senden verwendete angepaßt ist;
- Mittel (29 bis 37) zum Decodieren der empfangenen Messungen anhand eines vom Korrelator (28) gelieferten Signals.

10. Netzwerk nach Anspruch 9, dadurch gekennzeichnet, daß der Barker-Sequenzgenerator (8) zum Senden und der Korrelator (28) zum Empfangen jeweils durch ein Oberflächenwellenbauelement gebildet sind, das Elektroden umfaßt, deren geometrische Eigenschaften den Binärwerten der Barker-Sequenz entsprechen.

11. Netzwerk nach Anspruch 1, dadurch gekennzeichnet, daß jede Station Mittel (4) zum Berechnen und Einfügen wenigstens eines Fehlererfassungsbits in jede Meldung, die sie sendet, aufweist;
und Mittel (34) aufweist, um ein Fehlererfassungsbit aus jeder Meldung, die sie empfängt, zu berechnen, es mit dem in der Meldung enthaltenen zu vergleichen und eventuell eine Meldung zu senden, die die Wiederholung der letzten an sie gerichteten Meldung verlangt, wenn der Vergleich ergibt, daß diese letztere Meldung einen Fehler besitzt.

12. Station für ein drahtloses lokales Netzwerk nach einem der Ansprüche 1 bis 11, wobei das Netzwerk einen Wiederholer zum Wiederaussenden jeder von einer Station des Netzwerks gesendeten Meldung aufweist und dieser Wiederholer an ein Funkkabel gekoppelt ist, das in der Nähe aller Stationen des Netzwerks verläuft, wobei die Station Mittel (37) zum Senden und Empfangen von Funkmeldungen und zum Bearbeiten nur derjenigen Meldungen, die an sie adressiert sind und die vom Wiederholer wieder ausgesendet worden sind, besitzt,
dadurch gekennzeichnet, daß diese Mittel der Station eingerichtet sind, um nur diejenigen Meldungen zu berücksichtigen, die eine Information enthalten, die angibt, daß die Meldung den Wiederholer durchlaufen hat.

13. Wiederholer für ein drahtloses lokales Netzwerk mit mehreren Stationen nach einem der Ansprüche 1 bis 11, wobei der Wiederholer an ein Funkkabel gekoppelt ist, das in der Nähe aller Stationen des Netzwerks verläuft,
dadurch gekennzeichnet, daß der Wiederholer die Meldungen der Stationen in ein und demselben Frequenzband abwechselnd empfängt und wieder aussendet, aber zu jeder Meldung wenigstens eine Information hinzufügt, die angibt, daß die Meldung den Wiederholer durchlaufen hat.

## Claims

1. Wireless local area network including a plurality of stations (S1, ..., S4) each including means (IRR, IRE) for sending and receiving radio messages and a repeater (R) for retransmitting each message sent by a station, said repeater being connected to a radiating cable (CR) passing near all the stations, each station including means (37) for processing only messages addressed to it and retransmitted by the repeater;
characterised in that the repeater receives and retransmits the messages from the stations in the same frequency band, half-duplex, but add to each message retransmitted at least one item of information indicating that the message has passed through the repeater;
and in that each station includes means (37) for ignoring messages that do not contain information indicating that the message has passed through the repeater.

2. Network according to claim 1 characterised in that each station includes means (2) for sending each message with a predetermined duration (D);
in that the repeater (R) includes means (PR) for retransmitting each message after a predetermined time delay at least equal to the fixed message duration (D);
and in that each station includes means (CE) for comparing a message received from said repeater after sending a message with the message that it sent and sending said message again with a pseudo-random time-delay if the comparison does not indicate that said messages are identical.

3. Network according to claim 1 characterised in that the repeater includes means for adding to each retransmitted message binary information to control at least one station; and in that each station includes means (37) for receiving binary control information added to a message retransmitted by the repeater.

4. Network according to claim 1 characterised in that the repeater (R) includes means for sending service messages to stations at its own initiative and in that each station includes means (37) for executing an instruction contained in a service message addressed to it.

5. Network according to claim 4 characterised in that each station includes means for sending at a variable power level controlled by service messages sent to it by the repeater;
and in that the repeater includes means (P) for determining said power in such a way as to achieve a given quality of transmission between the repeater and said station.

6. Network according to claim 1 characterised in that the repeater (R') further includes means (C) for connecting it to at least one cable local area network (B, S6 to S10); said means retransmitting at least some of the radio messages sent by the stations (S1 to S5) on the cable local area network, in the format corresponding thereto;
and retransmitting messages from the cable network on the radiating cable (CR).

7. Network according to claim 3 characterised in that:
- the repeater includes means (PR) for adding to each message a binary word specific to said network;
all the stations include means (37) for detecting said binary word in each message received and ignoring messages which do not include the binary word specific to the network of which they are part.

8. Network according to claim 7 characterised in that the repeater and all the stations include means (6 to 14) for sending in all of said bandwidth using a spectrum spreading method.

9. Network according to claim 8 characterised in that the repeater and the stations include, for sending:
- a source (6) delivering bursts of high-frequency signal having a predetermined duration and a Gaussian form of amplitude modulation;
- a Barker sequence generator (8) processing the bursts delivered by the source;
- means (1 to 4) for coding messages to be transmitted in the form of a binary signal having a fixed bit period and a fixed number of bits, said binary signal controlling the source (6);
and including, for receiving:
- a correlator (28) whose weighting coefficients are binary values ± 1 constituting a Barker sequence complementary with that used for sending; and
- means (29 to 37) for decoding messages received using a signal supplied by the correlator (28).

10. Network according to claim 9 characterised in that the Barker sequence generator (8) for sending and the correlator (28) for receiving each comprise a surface acoustic wave device including electrodes whose geometrical characteristics correspond to the binary values of said Barker sequence.

11. Network according to claim 1 characterised in that each station includes means (4) for calculating and inserting into each message that it sends at least one error detecting bit;
and includes means (34) for calculating an error detecting bit from each message that it receives, comparing it to that contained in said message, and if necessary sending a message requesting repeating of the last message sent to it, if the comparison indicates that this latter message includes an error.

12. Station for a wireless local area network according to any one of claims 1 to 11, the network including a repeater for retransmitting each message sent by a station of the network, this repeater being coupled to a radiating cable passing near all the stations of the network, the station including means (37) for sending and receiving radio messages and for processing only messages addressed to it that have been retransmitted by the repeater, characterised in that said means of the station are adapted to ignore messages that do not contain information indicating that the message has passed through the repeater.

13. Repeater for a wireless local area network including a plurality of stations according to any one of claims 1 to 11, the repeater being coupled to a radiating cable passing near all the stations of the network, characterised in that the repeater receives and retransmits the messages from the stations in the same frequency band, half-duplex, but adds to each message at least one item of information indicating that the message has passed through the repeater.
